# EUROPÄISCHE PATENTSCHRIFT

(11) **EP 3 003 805 B1**
(45) Veröffentlichungstag und Bekanntmachung des Hinweises auf die Patenterteilung: **29.09.2021**
(21) Anmeldenummer: 14718373.5
(22) Anmeldetag: 15.04.2014
(51) Int. Cl.: B60T 10/02, F16D 57/04, F16D 67/02

(54) **VERFAHREN ZUM STEUERN EINES ÜBER EINE TRENNKUPPLUNG MECHANISCH ABKOPPELBAREN HYDRODYNAMISCHEN RETARDERS**
METHOD FOR CONTROLLING A HYDRODYNAMIC RETARDER THAT CAN BE MECHANICALLY DISENGAGED BY A DISCONNECT CLUTCH
PROCÉDÉ DE COMMANDE D'UN RETARDATEUR HYDRODYNAMIQUE POUVANT ÊTRE DÉSACCOUPLÉ MÉCANIQUEMENT AU MOYEN D'UN EMBRAYAGE DE COUPURE

(30) Priorität: 07.06.2013 DE 102013009534
(43) Veröffentlichungstag der Anmeldung: 13.04.2016
(60) Teilanmeldung: 20204587.8
(73) Patentinhaber: Voith Patent GmbH, 89522 Heidenheim (DE)
(72) Erfinder: ADAMS, Werner, 74564 Crailsheim (DE); LAUKEMANN, Dieter, 74564 Crailsheim (DE); MENNE, Achim, 74564 Crailsheim (DE); SCHADE, Ravi, 74564 Crailsheim (DE)
(74) Vertreter: Voith Patent GmbH - Patentabteilung
(86) Internationale Anmeldenummer: PCT/EP2014/057579
(87) Internationale Veröffentlichungsnummer: WO 2014/195050

(56) Entgegenhaltungen:
- WO-A1-2013/083457
- WO-A1-2014/116177
- WO-A2-2014/195051
- DE-A1-102009 001 146
- DE-A1-102011 120 626
- None

## Beschreibung

Die vorliegende Erfindung betrifft ein Verfahren zum Steuern eines über eine Trennkupplung mechanisch abkoppelbaren hydrodynamischen Retarders in einem Kraftfahrzeug, im Einzelnen gemäß den Oberbegriffen der unabhängigen Ansprüche.

Um die Leerlaufverluste eines hydrodynamischen Retarders auf Null abzusenken, wurde bereits vorgeschlagen, den hydrodynamischen Retarders mittels einer Trennkupplung vom Antriebsstrang, den er im Bremsbetrieb abbremsen soll, in einem Nichtbremsbetrieb abzukoppeln. Gleichzeitig wird beim Übergang vom Bremsbetrieb zum Nichtbremsbetrieb der Arbeitsraum vom Arbeitsmedium entleert, das im Bremsbetrieb im Arbeitsraum eine hydrodynamische Kreislaufströmung zur Übertragung von Drehmoment vom Rotor auf den Stator oder bei einem Gegenlaufretarder vom Rotor auf einen gegensinnig umlaufenden Gegenlaufrotor überträgt und dadurch den Rotor und mit diesem den antreibenden Antriebsstrang abbremst.

Das Ein- und Ausschalten eines hydrodynamischen Retarders wird in der Regel durch eine elektronische Steuervorrichtung gesteuert, wobei die elektronische Steuervorrichtung Anforderungen bezüglich des Einschaltens, Ausschaltens oder des Einstellens eines bestimmten Bremsmomentes beziehungsweise einer bestimmten Bremsstufe entweder von einem Fahrzeugführer empfängt, der eine entsprechende Eingabevorrichtung betätigt, beispielsweise einen Lenkstockhebel, oder in manchen Ausgestaltungen auch von einem sogenannten Fahrerassistenzsystem, beispielsweise einem Geschwindigkeitsregelsystem oder Abstandshaltesystem des Fahrzeugs. Immer dann, wenn beispielsweise die elektronische Steuervorrichtung eine Retarderausschaltanforderung feststellt, bewirkt sie das Entleeren des Arbeitsraumes vom Arbeitsmedium und das Öffnen der Trennkupplung.

In der DE 10 2009 001 146 A1 wird beispielsweise ein Antriebsstrang mit einem Retarder offenbart bei dem zwischen dem Rotor des Retarders und dem Antriebsstrang eine Kupplung positioniert ist.

Im Hinblick auf die Verkehrssicherheit und den Komfort ist es wichtig, dass Anforderungen bezüglich des Einschaltens, Ausschaltens oder Einstellens eines bestimmten Bremsmomentes des hydrodynamischen Retarders möglichst schnell umgesetzt werden. Ziel ist beispielsweise eine Umsetzung einer entsprechenden Anforderung in weniger als einer Sekunde oder sogar weniger als 0,5 Sekunden.

Es ist daher verständlich, dass, wenn beispielsweise eine Retarderausschaltanforderung festgestellt wird, die Entleerung des Arbeitsraumes und das Öffnen der Trennkupplung herkömmlich unmittelbar und beschleunigt durchgeführt wird.

In der Praxis hat sich nun herausgestellt, dass die gewünschten Reaktionszeiten in der Regel eingehalten werden können. Allerdings ist besonders bei häufigen Einschalt- und Ausschaltvorgängen von hydrodynamischen Retardern, die beim Übergang vom Bremsbetrieb zum Nichtbremsbetrieb vom Antriebsstrang mechanisch abgekoppelt werden und beim Übergang vom Nichtbremsbetrieb zum Bremsbetrieb durch reibende Schlupfüberbrückung in der Trennkupplung wieder zugeschaltet werden, der Verschleiß in der Kupplung relativ hoch und damit der Wartungsaufwand groß.

In der nachveröffentlichten deutschen Patentanmeldung DE 10 2010 120 621 wird daher vorgeschlagen, beim Übergang vom Bremsbetrieb zum Nichtbremsbetrieb die Trennkupplung verzögert zu öffnen, wobei die Zeitspanne der Verzögerung in Abhängigkeit verschiedener Zustandsgrößen des hydrodynamischen Retarders erfolgt. Dadurch kann die Anzahl von notwendigen Synchronisierungen der Trennkupplung reduziert und damit die Lebensdauer der Trennkupplung erhöht werden.

Obwohl durch die vorgenannte Maßnahme bereits der Verschleiß der Trennkupplung erheblich reduziert werden kann, gibt es immer noch Situationen, in denen die Trennkupplung einem besonders hohen Verschleiß unterliegt, was deren Lebensdauer verkürzt.

Der vorliegenden Erfindung liegt daher die Aufgabe zugrunde, ein Verfahren zum Steuern eines über eine Trennkupplung mechanisch abkoppelbaren hydrodynamischen Retarders anzugeben, bei welchem der Verschleiß der Trennkupplung reduziert wird.

Die erfindungsgemäße Aufgabe wird durch ein Verfahren gemäß der unabhängigen Ansprüche gelöst. In den abhängigen Ansprüchen sind besonders vorteilhafte und zweckmäßige Ausgestaltungen der Erfindung angegeben.

Durch das erfindungsgemäße Verfahren werden Situationen vermieden, in denen die Trennkupplung aufgrund einer großen Synchronisationsarbeit stark belastet wird. Eine solche große Synchronisationsarbeit tritt auf, wenn beim Synchronisieren, das heißt beim Schließen der Trennkupplung zum einen der Arbeitsraum des Retarders mit Arbeitsmedium befüllt, insbesondere vollständig befüllt ist, und zum anderen eine große Drehzahldifferenz mit der Trennkupplung überbrückt werden muss.

Es ist vorteilhaft, beim abgestellten Kraftfahrzeug den Arbeitsraum des Retarders mit Arbeitsmedium befüllt, insbesondere vollständig befüllt zu haben, um in einem angeschlossenen externen Arbeitsmediumsystem mit einem Arbeitsmediumvorratsbehälter einen definierten Arbeitsmediumpegel in dem Arbeitsmediumvorratsbehälter zu erreichen. Wenn beispielsweise der hydrodynamische Retarder in einen Fahrzeugkühlkreislauf integriert ist, wobei das Kühlmedium zugleich das Arbeitsmedium des Retarders ist, so handelt es sich bei dem genannten Arbeitsmediumvorratsbehälter um den Vorratsbehälter des Kühlmediums, dessen Füllstand regelmäßig geprüft werden muss und wobei eine vorgegebene Menge von Kühlmedium im gegenüber der Umgebung druckdicht abgeschlossenen Fahrzeugkühlkreislauf sichergestellt sein muss, um einen gewünschten Überdruck im Fahrzeugkühlkreislauf zu erreichen. Wenn nun im abgestellten Zustand des Fahrzeugs der Arbeitsraum mit Arbeitsmedium befüllt ist, indem unmittelbar vor, während oder unmittelbar nach Einleitung und/oder Beendigung eines Abstellvorgangs des Kraftfahrzeugs der Arbeitsraum des hydrodynamischen Retarders stets mit derselben vorbestimmten Arbeitsmediummenge befüllt wird, so kann dieser definierte Füllstand im Vorratsbehälter sichergestellt werden.

Allerdings bedeutet dies zugleich, dass das Arbeitsmedium beim Anfahren des Kraftfahrzeugs nach Beendigung des Abstellvorgangs wieder aus dem Arbeitsraum des hydrodynamischen Retarders ausgetragen werden muss, was vorteilhaft allein aufgrund der Pumpwirkung des Retarders im Betrieb desselben bewirkt wird. Hierzu muss die Trennkupplung geschlossen sein. Wenn nun die Trennkupplung erst oberhalb einer vorgegebenen Drehzahl des Rotors des hydrodynamischen Retarders oder einer vorgegebenen Fahrzeuggeschwindigkeit geschlossen wird, so treten die unerwünschten Verschleißerscheinungen in der Trennkupplung auf.

Gemäß einer ersten Ausführungsform eines erfindungsgemäßen Verfahrens wird daher die Drehzahl des Rotors und/oder eine Geschwindigkeit des Kraftfahrzeugs überwacht und unabhängig von einer Retardereinschaltanforderung des Fahrerassistenzsystems oder durch Betätigen der Eingabevorrichtung durch den Fahrzeugführer die Trennkupplung unterhalb einer vorgegebenen Drehzahl des Rotors und/oder Geschwindigkeit des Kraftfahrzeugs geschlossen. Dabei kann es sich um ein solches Bremssystem eines Kraftfahrzeugs mit einem hydrodynamischen Retarder handeln, wobei der hydrodynamische Retarder einen umlaufenden beschaufelten Rotor und einen beschaufelten Stator oder einen umlaufenden beschaufelten Rotor und einen in Gegenrichtung hierzu umlaufenden beschaufelten Gegenlaufrotor aufweist, die gemeinsam einen in einem Bremsbetrieb mit Arbeitsmedium befüllten und in einem Nichtbremsbetrieb vom Arbeitsmedium entleerten Arbeitsraum ausbilden, bei dem der Rotor im Bremsbetrieb über einen Antriebsstrang mit einer geschlossenen Trennkupplung angetrieben wird und beim Übergang vom Bremsbetrieb zum Nichtbremsbetrieb der Arbeitsraum entleert und die Trennkupplung geöffnet wird. Alternativ ist ein hydrodynamischer Retarder vorgesehen, bei welchem der Gegenlaufrotor im Bremsbetrieb über einen Antriebsstrang mit einer geschlossenen Trennkupplung angetrieben wird oder der Stator im Bremsbetrieb mit einer geschlossenen Trennkupplung stationär gegen ein stehendes Bauteil abgestützt wird, und beim Übergang vom Bremsbetrieb zum Nichtbremsbetrieb wird der Arbeitsraum entleert und die Trennkupplung geöffnet. Der Gegenlaufrotor oder der Stator können dann im Nichtbremsbetrieb frei mit dem Rotor umlaufen, und der Aufbau eines Restbremsmomentes durch eine Kreislaufströmung von Luft und/oder Restarbeitsmedium im Arbeitsraum wird verhindert, genauso wie bei der Ausführungsform mit über die Trennkupplung abkoppelbarem Rotor, der im Nichtbremsbetrieb stehen bleibt.

In beiden Fällen wird der Übergang vom Bremsbetrieb zum Nichtbremsbetrieb durch eine Retarderausschaltanforderung eines Fahrerassistenzsystems oder durch Betätigen einer Eingabevorrichtung durch einen Fahrzeugführer initiiert, und der Übergang vom Nichtbremsbetrieb zum Bremsbetrieb wird durch eine Retardereinschaltanforderung des Fahrerassistenzsystems oder durch Betätigen der Eingabevorrichtung durch den Fahrzeugführer initiiert.

Gemäß einer zweiten Ausführungsform des erfindungsgemäßen Verfahrens, die wiederum die beiden genannten Alternativen bezüglich der Anordnung der Trennkupplung, einmal in der Triebverbindung zum Rotor und das andere mal in der Triebverbindung zum Stator/Gegenlaufrotor aufweisen kann, wird zur Vermeidung des hohen Verschleißes in der Trennkupplung die Trennkupplung unabhängig von der Retardereinschaltanforderung des Fahrerassistenzsystems oder durch Betätigen der Eingabevorrichtung durch den Fahrzeugführer zu Beginn eines Anfahrvorgangs des Kraftfahrzeugs geschlossen, wenn in einem Stillstand des Kraftfahrzeugs der Arbeitsraum mit Arbeitsmedium befüllt ist, zumindest beim Beginn des Anfahrvorgangs.

Beide dargestellten Ausführungsformen des erfindungsgemäßen Verfahrens stellen sicher, dass bereits bei kleinen Geschwindigkeiten des Kraftfahrzeugs beziehungsweise bei kleinen Drehzahlen des Rotors oder Gegenlaufrotors des hydrodynamischen Retarders im mit Arbeitsmedium befüllten Zustand aufgrund einer Flutung des Arbeitsraumes im Stillstand, eine Synchronisierung beziehungsweise ein Schließen der Trennkupplung erfolgt, was mit einer verhältnismäßig geringen Kupplungsarbeit und damit einem geringeren Verschleiß der Trennkupplung verbunden ist.

Eine vorteilhafte Ausführungsform der Erfindung sieht vor, dass die Trennkupplung bereits dann geschlossen wird, bevor das Kraftfahrzeug bei sich reduzierender Geschwindigkeit des Kraftfahrzeugs den Stillstand erreicht hat.

Günstig ist, wenn eine Drehzahl des Rotors und/oder Gegenlaufrotors und/oder eine Geschwindigkeit des Kraftfahrzeugs überwacht wird und die Trennkupplung vollständig geschlossen wird, bevor eine vorgegebene Drehzahl des Rotors und/oder Gegenlaufrotors und/oder Geschwindigkeit des Kraftfahrzeugs erreicht wird.

Um den eingangs dargestellten definierten Füllstand bei einem abgestellten Fahrzeug im Kühlmediumbehälter zu erreichen, wenn das Kühlmedium eines Fahrzeugkühlkreislaufs zugleich das Arbeitsmedium des hydrodynamischen Retarders ist, wobei mit dem Fahrzeugkühlkreislauf eine Komponente des Kraftfahrzeugs, insbesondere der Antriebsmotor, beispielsweise Verbrennungsmotor, gekühlt wird, wird vorteilhaft unmittelbar vor, während oder unmittelbar nach Einleitung und/oder Beendigung eines Abstellvorgangs des Kraftfahrzeugs der Arbeitsraum des hydrodynamischen Retarders stets mit derselben vorbestimmten Arbeitsmediummenge befüllt.

Dies bedeutet, dass der Arbeitsraum des Retarders bei Einleitung oder Beendigung des Abstellvorganges immer auf denselben Füllstand gebracht wird, unabhängig davon, ob ein Bremswunsch vorliegt beziehungsweise vorlag oder nicht. Stets derselbe Füllstand kann dadurch erreicht werden, dass stets dieselbe Arbeitsmediummenge im Arbeitsraum des Retarders eingestellt wird, indem der Arbeitsraum des Retarders stets vollgefüllt wird.

Das Einstellen der gewünschten Arbeitsmediummenge im Arbeitsraum wird automatisch ausgeführt, wenn das Fahrzeug abgestellt wird, somit also unmittelbar vor dem Abstellvorgang, während des Abstellvorganges oder unmittelbar nach dem Abstellvorgang, wobei letzteres nicht das Ende der Standzeit beschreibt, sondern das Ende des Abstellens.

Das Einleiten des Abstellvorgangs kann zum Beispiel durch Ausschalten oder Unterbrechen des Zündkreises (Zündung), Aktivieren einer Feststelleinrichtung (zum Beispiel Handbremse), durch Einlegen der Wählstufe "Parken" des Getriebes, wenn das Fahrzeug über ein Automatikgetriebe/automatisiertes Schaltgetriebe verfügt oder in Abhängigkeit eines sonstigen, das Stillsetzen des Fahrzeugs für längere Zeit kennzeichnenden Signals erfolgen. Der Abstellvorgang kann aber auch einfach durch Deaktivieren beziehungsweise Ausschalten der Antriebsmaschine eingeleitet werden.

Das Signal, das die Einleitung und/oder Beendigung des Abstellvorgangs unmittelbar vor, während oder unmittelbar nach dem Abstellen kennzeichnet, kann beispielsweise durch Erfassen der aktuellen Stellung des Zündschlüssels in der Zündung erfolgen. Wird dieser aus der aktuellen Stellung in eine andere verbracht, so kann der Arbeitsraum des Retarders bereits vor oder während der Drehung des Zündschlüssels oder unmittelbar, das heißt auch zeitverzögert, nachdem der Zündschlüssel in die nächste Position oder die Endposition gedreht wurde, befüllt oder entleert werden, um den gewünschten stets identischen Füllstand zu erreichen.

Vorteilhaft wird der Arbeitsraum des hydrodynamischen Retarders mittels einer Befülleinrichtung befüllt.

Mit Vorteil wird der Arbeitsraum des hydrodynamischen Retarders mittels eines als Schweredruck wirkenden Überdruckes des Arbeitsmediums/Kühlmediums im Kühlkreislauf befüllt. Das bedeutet, dass der Retarder an einer geodätisch niedrigeren Position angeordnet wird, als ein anderer kühlmediumführender Teil des Kühlkreislaufes, insbesondere als ein im Kühlkreislauf vorgesehener Vorratsbehälter für Kühlmedium. Somit braucht bloß ein Durchlass in den Arbeitsraum des Retarders geöffnet werden, und das Kühlmedium strömt aufgrund der Schwerkraft in den Arbeitsraum des Retarders ein. Alternativ ist es natürlich auch möglich, den Retarder derart an einer geodätisch höheren Position anzuordnen, dass sich dieser, insbesondere durch Öffnen eines Durchlasses mittels der auf das Arbeitsmedium im Arbeitsraum wirkenden Schwerkraft entleert.

Gemäß einer alternativen Ausgestaltung wird der Arbeitsraum des hydrodynamischen Retarders mittels eines pneumatischen Überdruckes aus einem Fahrzeugdruckluftsystem befüllt. So kann beispielsweise Druckluft auf eine Membran oder ein Kolben, letzteres insbesondere eines Zylinders, aufgebracht werden, um Arbeitsmedium in den Arbeitsraum zu schieben. Auch ein Entleeren im Sinne eines Freiblasens des Arbeitsraums des hydrodynamischen Retarders mittels eines Überdruckes, insbesondere pneumatischen Überdruckes, ist möglich. Anstelle von Druckluft könnte jedoch auch ein anderes Medium, beispielsweise Dampf zum Freiblasen verwendet werden.

Eine vorteilhafte erfindungsgemäße Ausführungsform sieht vor, dass bei einem Anfahrvorgang des Kraftfahrzeugs erfasst wird, ob der Arbeitsraum mit Arbeitsmedium befüllt ist und bei der Erfassung eines vom Arbeitsmedium entleerten Arbeitsraums die Trennkupplung geöffnet, insbesondere sofort geöffnet wird. Dabei kann zumindest bei dem Anfahrvorgang des Kraftfahrzeugs fortlaufend erfasst werden, ob der Arbeitsraum mit Arbeitsmedium befüllt ist oder nicht, und sobald ein vom Arbeitsmedium entleerter Arbeitsraum erfasst wird, die Trennkupplung geöffnet werden.

Die letztgenannte Maßnahme schließt natürlich nicht aus, dass bei zwischenzeitlich erfolgter Retardereinschaltanforderung dieser eine höhere Priorität als dem Öffnen der Trennkupplung aufgrund des entleerten Zustandes des Arbeitsraums zugeordnet wird, und die Trennkupplung geschlossen bleibt.

Die Erfindung soll nachfolgend anhand von Ausführungsbeispielen exemplarisch beschrieben werden.

Es zeigen:
- Figur 1: eine schematische Darstellung eines erfindungsgemäß angesteuerten hydrodynamischen Retarders mit einer Trennkupplung in der Triebverbindung zum Rotor;
- Figur 2: eine schematische Darstellung eines erfindungsgemäß angesteuerten hydrodynamischen Retarders mit einer Trennkupplung in der Triebverbindung zum Stator.

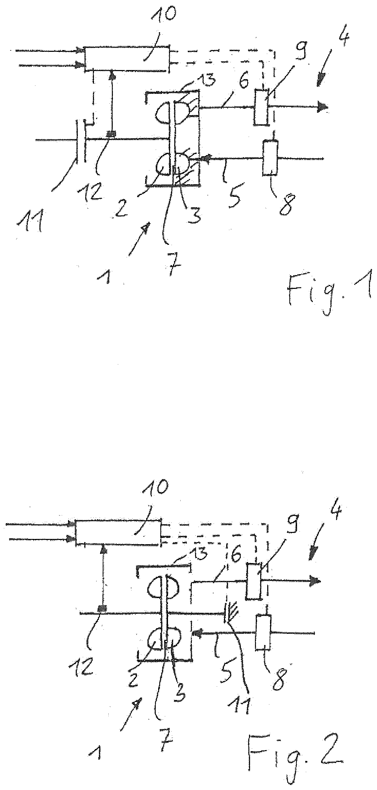

In der Figur 1 ist ein hydrodynamischer Retarder 1 mit einem Rotor 2 und einem Stator 3 dargestellt. Das Arbeitsmedium wird aus einem externen Arbeitsmediumkreislauf 4 dem Arbeitsraum 7 über eine Arbeitsmediumzufuhr 5 zugeführt und zum Kühlen des im Arbeitsraum 7 erwärmten Arbeitsmedium über eine Arbeitsmediumabfuhr 6 aus dem Retarder 1 abgeführt. In der Arbeitsmediumzufuhr 5 ist ein Einlassventil 8 angeordnet, und in der Arbeitsmediumabfuhr 6 ist ein Retarderauslassventil 9 vorgesehen. Die Retardersteuervorrichtung 10 greift sowohl auf das Retardereinlassventil 8 als auch auf das Retarderauslassventil 9 zu, zumindest mittelbar. Für den Übergang vom Nichtbremsbetrieb zum Bremsbetrieb wird das Retardereinlassventil 8 geöffnet. Das Retarderauslassventil 9 wird mit einem Stelldruck derart angesteuert, dass es die gewünschte Anstauung des Arbeitsmediums und damit den gewünschten Füllungsgrad des Arbeitsraumes 7 bewirkt. Alternativ käme auch eine Füllungsgradsteuerung mittels einer verdrängenden Druckbeaufschlagung eines Arbeitsmediumvorrats in Betracht.

Beim Übergang vom Bremsbetrieb zum Nichtbremsbetrieb wird das Einlassventil 8 geschlossen, damit kein weiteres Arbeitsmedium in den Arbeitsraum 7 strömen kann. Zugleich wird das Auslassventil 9 noch solange offen gehalten, bis sich der Arbeitsraum 7 auf den gewünschten Zustand entleert hat. Hierzu ist es notwendig, den Rotor 2 fortgesetzt anzutreiben, um dessen Pumpwirkung auszunutzen. Somit wird auch die Trennkupplung 11 noch solange geschlossen gehalten, bis sichergestellt ist, dass die Entleerung in ausreichendem Maße stattgefunden hat.

Da die Dauer der Entleerung von der Drehzahl des Rotors 2 zum Zeitpunkt der gewünschten Abschaltung, das heißt bei der Feststellung der Retarderausschaltanforderung abhängig ist, wird die Drehzahl des Rotors 2 erfasst, beispielsweise über den dargestellten Drehzahlsensor 12, und der Retardersteuervorrichtung 10 mitgeteilt. Der Drehzahlsensor 12 könnte auch an einer anderen Stelle positioniert sein, beispielsweise in Richtung des Antriebsleistungsflusses vor der Trennkupplung 11 oder die Drehzahl könnte der Retardersteuervorrichtung 10 anders zur Verfügung gestellt werden, beispielsweise über einen CAN-Bus, da die Drehzahl in der Regel von einer anderen Drehzahl im Antriebsstrang, in dem der hydrodynamische Retarder 1 vorgesehen ist, abhängig ist, beispielsweise der Getriebewellenabtriebsdrehzahl eines Kraftfahrzeuggetriebes oder von der Fahrzeuggeschwindigkeit, bei einem sogenannten Sekundärretarder oder der Motordrehzahl bei einem Primärretarder.

Die Retardersteuervorrichtung 10 steuert ferner, wie durch die gestrichelte Linie angedeutet ist, das Öffnen und Schließen der Trennkupplung 11. Ferner empfängt sie Eingangssignale, beispielsweise von einem Retarderbedienhebel und einem Fahrerassistenzsystem, um eine Retarderausschaltanforderung feststellen zu können.

Immer dann, wenn eine vorgegebene Drehzahl des Rotors 2 und/oder eine vorgegebene Geschwindigkeit des Kraftfahrzeugs unterschritten wird, wird die Trennkupplung 11 geschlossen. Das Schließen kann abgeschlossen sein, bevor das Kraftfahrzeug den Stillstand erreicht hat. Das Schließen der Trennkupplung wird in der Regel bei entleertem Arbeitsraum 7 des hydrodynamischen Retarders 1 erfolgen, wobei insbesondere anschließend der Arbeitsraum 7 entleert bleibt und die Trennkupplung 11 geschlossen gehalten wird, solange keine Retardereinschaltanforderung erfasst wird, die vorgegebene Drehzahl des Rotors 2 und/oder die Geschwindigkeit des Kraftfahrzeugs nicht wieder erreicht wird oder ein Stillstand oder Abstellvorgang des Kraftfahrzeugs erfasst wird.

Die Ausführungsform gemäß der Figur 2 entspricht weitgehend jener der Figur 1. Abweichend ist jedoch hier die Trennkupplung 11 in der Triebverbindung zum Stator 3 vorgesehen, sodass der Stator 3 im Nichtbremsbetrieb des hydrodynamischen Retarders 1 mit dem Rotor 2 umläuft, ohne dass ein Bremsmoment erzeugt wird, und beim Übergang vom Nichtbremsbetrieb zum Bremsbetrieb mit der Trennkupplung 11 zum Stillstand abgebremst wird. Alternativ könnte anstelle des Stators 3 auch ein Gegenlaufrotor vorgesehen sein, der beim Übergang vom Nichtbremsbetrieb zum Bremsbetrieb mittels der Trennkupplung 11 beschleunigt wird und entgegen der Drehrichtung des Rotors 2 angetrieben wird.

## Patentansprüche

1. Verfahren zum Steuern eines über eine Trennkupplung (11) mechanisch abkoppelbaren hydrodynamischen Retarders (1) in einem Kraftfahrzeug, welcher einen umlaufenden beschaufelten Rotor (2) und einen beschaufelten Stator (3) oder einen umlaufenden beschaufelten Rotor (2) und einen in Gegenrichtung hierzu umlaufenden beschaufelten Gegenlaufrotor aufweist, die gemeinsam einen in einem Bremsbetrieb mit Arbeitsmedium befüllten und in einem Nichtbremsbetrieb vom Arbeitsmedium entleerten Arbeitsraum (7) ausbilden, wobei der Rotor (2) im Bremsbetrieb über einen Antriebsstrang mit einer geschlossenen Trennkupplung (11) angetrieben wird und beim Übergang vom Bremsbetrieb zum Nichtbremsbetrieb der Arbeitsraum (7) entleert und die Trennkupplung (11) geöffnet wird,
wobei der Übergang vom Bremsbetrieb zum Nichtbremsbetrieb durch eine Retarderausschaltanforderung eines Fahrerassistenzsystems oder durch Betätigen einer Eingabevorrichtung durch einen Fahrzeugführer initiiert wird, und
der Übergang vom Nichtbremsbetrieb zum Bremsbetrieb durch eine Retardereinschaltanforderung des Fahrerassistenzsystems oder durch Betätigen einer Eingabevorrichtung durch den Fahrzeugführer initiiert wird, **dadurch gekennzeichnet, dass**
eine Drehzahl des Rotors (2) und/oder eine Geschwindigkeit des Kraftfahrzeugs überwacht wird und unabhängig von der Retardereinschaltanforderung des Fahrerassistenzsystems oder durch Betätigen der Eingabevorrichtung durch den Fahrzeugführer die Trennkupplung (11) unterhalb einer vorgegebenen Drehzahl des Rotors (2) und/oder Geschwindigkeit des Kraftfahrzeugs geschlossen wird.

2. Verfahren zum Steuern eines über eine Trennkupplung (11) mechanisch abkoppelbaren hydrodynamischen Retarders (1) in einem Kraftfahrzeug, welcher einen umlaufenden beschaufelten Rotor (2) und einen beschaufelten Stator (3) oder einen umlaufenden beschaufelten Rotor (2) und einen in Gegenrichtung hierzu umlaufenden beschaufelten Gegenlaufrotor aufweist, die gemeinsam einen in einem Bremsbetrieb mit Arbeitsmedium befüllten und in einem Nichtbremsbetrieb vom Arbeitsmedium entleerten Arbeitsraum (7) ausbilden, wobei der Gegenlaufrotor (2) im Bremsbetrieb über einen Antriebsstrang mit einer geschlossenen Trennkupplung (11) angetrieben wird oder der Stator (3) im Bremsbetrieb mit einer geschlossenen Trennkupplung (11) stationär gegen ein stehendes Bauteil abgestützt wird und beim Übergang vom Bremsbetrieb zum Nichtbremsbetrieb der Arbeitsraum (7) entleert und die Trennkupplung (11) geöffnet wird,
wobei der Übergang vom Bremsbetrieb zum Nichtbremsbetrieb durch eine Retarderausschaltanforderung eines Fahrerassistenzsystems oder durch Betätigen einer Eingabevorrichtung durch einen Fahrzeugführer initiiert wird, und
der Übergang vom Nichtbremsbetrieb zum Bremsbetrieb durch eine Retardereinschaltanforderung des Fahrerassistenzsystems oder durch Betätigen einer Eingabevorrichtung durch den Fahrzeugführer initiiert wird, **dadurch gekennzeichnet, dass**
eine Drehzahl des Rotors (2) und/oder des Gegenlaufrotors und/oder eine Geschwindigkeit des Kraftfahrzeugs überwacht wird, und unabhängig von der Retardereinschaltanforderung des Fahrerassistenzsystems oder durch Betätigen der Eingabevorrichtung durch den Fahrzeugführer die Trennkupplung (11) unterhalb einer vorgegebenen Drehzahl des Rotors (2) und/oder des Gegenlaufrotors und/oder Geschwindigkeit des Kraftfahrzeugs geschlossen wird.

3. Verfahren gemäß einem der Ansprüche 1 oder 2, **dadurch gekennzeichnet, dass** die Trennkupplung (11) geschlossen wird, bevor das Kraftfahrzeug bei sich reduzierender Geschwindigkeit den Stillstand erreicht hat.

4. Verfahren gemäß einem der Ansprüche 1 bis 3, **dadurch gekennzeichnet, dass** das Schließen der Trennkupplung (11) bei vom Arbeitsmedium entleertem Arbeitsraum (7) des hydrodynamischen Retarders (1) erfolgt und insbesondere anschließend der Arbeitsraum (7) vom Arbeitsmedium entleert bleibt und die Trennkupplung (11) geschlossen gehalten wird, solange keine Retardereinschaltanforderung erfasst wird, die vorgegebene Drehzahl des Rotors (2) und/oder Gegenlaufrotors und/oder die Geschwindigkeit des Kraftfahrzeugs nicht erreicht wird oder der Stillstand des Kraftfahrzeugs erreicht wird.

5. Verfahren gemäß einem der Ansprüche 1 bis 4, **dadurch gekennzeichnet, dass** der hydrodynamische Retarder (1) derart in einen Fahrzeugkühlkreislauf, der ein Kühlmedium zur Kühlung wenigstens einer Komponente des Kraftfahrzeugs, insbesondere eines Antriebsmotors, wie Verbrennungsmotors, führt, integriert ist, dass das Kühlmedium zugleich das Arbeitsmedium des hydrodynamischen Retarders (1) ist, und unmittelbar vor, während oder unmittelbar nach Einleitung und/oder Beendigung eines Abstellvorgangs des Kraftfahrzeugs der Arbeitsraum (7) des hydrodynamischen Retarders (1) stets mit derselben vorbestimmten Arbeitsmediummenge befüllt wird, insbesondere vollständig mit Arbeitsmedium befüllt wird.

## Claims

1. Method for controlling a hydrodynamic retarder (1) in a motor vehicle, which retarder can be mechanically uncoupled via a disconnecting coupling (11) and has a rotating bladed rotor (2) and a bladed stator (3) or a rotating bladed rotor (2) and a counterrotating bladed rotor rotating in the opposite direction thereto, which together form a working chamber (7) filled with working medium in a braking mode and emptied of working medium in a non-braking mode, the rotor (2) being driven in the braking mode via a drive train with a closed separating clutch (11) and the working chamber (7) being emptied and the separating clutch (11) being opened during the transition from the braking mode to the non-braking mode, the transition from braking mode to non-braking mode being initiated by a retarder disengagement request from a driver assistance system or by actuation of an input device by a vehicle driver, and the transition from non-braking mode to braking mode being initiated by a retarder engagement request from the driver assistance system or by actuation of an input device by the vehicle driver, **characterized in that** a rotational speed of the rotor (2) and/or a speed of the motor vehicle is monitored and the disconnect clutch (11) is closed below a predefined rotational speed of the rotor (2) and/or speed of the motor vehicle independently of the retarder engagement request of the driver assistance system or by actuation of the input device by the vehicle driver.

2. Method for controlling a hydrodynamic retarder (1) in a motor vehicle which can be mechanically uncoupled via a disconnect clutch (11) and which has a rotating bladed rotor (2) and a bladed stator (3) or a rotating bladed rotor (2) and a counter-rotating bladed rotor rotating in the opposite direction thereto, which together form a working chamber (7) which is filled with working medium in braking mode and is emptied of working medium in non-braking mode, wherein the counter-rotating rotor (2) is driven in braking operation via a drive train with a closed separating coupling (11) or the stator (3) is supported stationarily against a stationary component in braking operation with a closed separating coupling (11) and, during the transition from braking operation to non-braking operation, the working chamber (7) is emptied and the separating coupling (11) is opened, the transition from braking mode to non-braking mode being initiated by a retarder disengagement request from a driver assistance system or by actuation of an input device by a vehicle driver, and the transition from non-braking mode to braking mode being initiated by a retarder engagement request from the driver assistance system or by actuation of an input device by the vehicle driver, **characterized in that** a rotational speed of the rotor (2) and/or of the counter-rotating rotor and/or a speed of the motor vehicle is monitored, and the disconnecting clutch (11) is closed below a predefined rotational speed of the rotor (2) and/or of the counter-rotating rotor and/or speed of the motor vehicle independently of the retarder engagement request of the driver assistance system or by actuation of the input device by the vehicle driver.

3. Method according to one of claims 1 or 2, **characterized in that** the disconnect clutch (11) is closed before the motor vehicle has reached standstill at reducing speed.

4. Method according to one of claims 1 to 3, **characterized in that** the closing of the separating clutch (11) takes place with the working chamber (7) of the hydrodynamic retarder (1) emptied of the working medium and, in particular, subsequently the working chamber (7) remains emptied of the working medium and the separating clutch (11) is kept closed as long as no retarder engagement request is detected, the predetermined rotational speed of the rotor (2) and/or counterrotating rotor and/or the speed of the motor vehicle is not reached or the standstill of the motor vehicle is reached.

5. Method according to one of the claims 1 to 4, **characterized in that** the hydrodynamic retarder (1) is integrated in such a way into a vehicle cooling circuit which carries a cooling medium for cooling at least one component of the motor vehicle, in particular a drive engine, such as an internal combustion engine, **in that** the cooling medium is at the same time the working medium of the hydrodynamic retarder (1), and immediately before, during or immediately after initiation and/or termination of a shutdown process of the motor vehicle, the working chamber (7) of the hydrodynamic retarder (1) is always filled with the same predetermined working medium quantity, in particular is completely filled with working medium.

## Revendications

1. Procédé de commande d'un ralentisseur hydrodynamique (1) dans un véhicule automobile, qui peut être désaccouplé mécaniquement par l'intermédiaire d'un embrayage de découplage (11) et qui présente un rotor à aubes (2) rotatif et un stator à aubes (3) ou un rotor à aubes (2) rotatif et un rotor à aubes contrarotatif tournant en sens inverse de celui-ci, qui forment ensemble une chambre de travail (7) remplie de fluide de travail dans un mode de freinage et vidée du fluide de travail dans un mode de non-freinage, le rotor (2) étant entraîné dans le mode de freinage par l'intermédiaire d'un train d'entraînement avec un embrayage de séparation fermé (11) et la chambre de travail (7) étant vidée et l'embrayage de séparation (11) étant ouvert lors du passage du mode de freinage au mode de non-freinage, la transition du mode de freinage au mode de non-freinage étant initiée par une demande de désengagement du ralentisseur provenant d'un système d'assistance au conducteur ou par l'actionnement d'un dispositif d'entrée par un conducteur du véhicule, et la transition du mode de non-freinage au mode de freinage étant initiée par une demande d'engagement du ralentisseur provenant du système d'assistance au conducteur ou par l'actionnement d'un dispositif d'entrée par le conducteur du véhicule, **caractérisé en ce qu'**une vitesse de rotation du rotor (2) et/ou une vitesse du véhicule automobile est surveillée et l'embrayage de séparation (11) est fermé en dessous d'une vitesse de rotation prédéterminée du rotor (2) et/ou de la vitesse du véhicule automobile, indépendamment de la demande d'enclenchement du ralentisseur du système d'assistance au conducteur ou par l'actionnement du dispositif d'entrée par le conducteur du véhicule.

2. Procédé de commande d'un ralentisseur hydrodynamique (1) dans un véhicule automobile, qui peut être désaccouplé mécaniquement par l'intermédiaire d'un embrayage de séparation (11) et qui présente un rotor à aubes (2) rotatif et un stator à aubes (3) ou un rotor à aubes (2) rotatif et un rotor à aubes tournant en sens inverse de celui-ci, qui forment ensemble une chambre de travail (7) remplie de fluide de travail en mode de freinage et vidée de fluide de travail en mode de non-freinage, dans lequel le rotor contrarotatif (2) est entraîné en mode de freinage par un train d'entraînement avec un embrayage de séparation fermé (11) ou le stator (3) est appuyé de manière fixe contre un composant stationnaire en mode de freinage avec un embrayage de séparation fermé (11) et la chambre de travail (7) est vidée et l'embrayage de séparation (11) est ouvert pendant la transition du mode de freinage au mode de non-freinage, la transition du mode de freinage au mode de non-freinage étant initiée par une demande de désengagement du ralentisseur provenant d'un système d'assistance au conducteur ou par l'actionnement d'un dispositif d'entrée par le conducteur du véhicule, et la transition du mode de non-freinage au mode de freinage étant initiée par une demande d'engagement du ralentisseur provenant du système d'assistance au conducteur ou par l'actionnement d'un dispositif d'entrée par le conducteur du véhicule, **caractérisé en ce que en ce qu'**une vitesse de rotation du rotor (2) et/ou du rotor de contre-rotation et/ou une vitesse du véhicule automobile est surveillée, et **en ce que** l'embrayage de déconnexion (11) est fermé en dessous d'une vitesse de rotation prédéfinie du rotor (2) et/ou du rotor de contre-rotation et/ou de la vitesse du véhicule automobile, indépendamment de la demande d'enclenchement du ralentisseur du système d'assistance au conducteur ou par actionnement du dispositif d'entrée par le conducteur du véhicule.

3. Procédé selon l'une des revendications 1 ou 2, **caractérisé en ce que** l'embrayage de déconnexion (11) est fermé avant que le véhicule automobile ait atteint l'arrêt à vitesse réduite.

4. Procédé selon l'une des revendications 1 à 3, **caractérisé en ce que** la fermeture de l'embrayage de séparation (11) a lieu lorsque la chambre de travail (7) du ralentisseur hydrodynamique (1) est vidée du fluide de travail et, en particulier, la chambre de travail (7) reste ensuite vidée du fluide de travail et l'embrayage de séparation (11) est maintenu fermé tant qu'aucune demande d'enclenchement du ralentisseur n'est détectée, que la vitesse prédéterminée du rotor (2) et/ou du rotor de contre-rotation et/ou la vitesse du véhicule automobile n'est pas atteinte ou que l'arrêt du véhicule automobile est atteint.

5. Procédé selon l'une des revendications 1 à 4, **caractérisé en ce que** le ralentisseur hydrodynamique (1) est intégré de telle sorte dans un circuit de refroidissement du véhicule, qui conduit un fluide de refroidissement pour refroidir au moins un composant du véhicule automobile, en particulier un moteur d'entraînement, tel qu'un moteur à combustion interne, **en ce que** le fluide de refroidissement est en même temps le fluide de travail du ralentisseur hydrodynamique (1), et immédiatement avant, pendant ou immédiatement après le début et/ou la fin d'un processus d'arrêt du véhicule automobile, l'espace de travail (7) du ralentisseur hydrodynamique (1) est toujours rempli de la même quantité prédéterminée de fluide de travail, en particulier est complètement rempli de fluide de travail.
